# DEMANDE DE BREVET EUROPEEN

(11) **EP 2 180 438 A1**
(43) Date de publication de la demande: **28.04.2010**
(21) Numéro de dépôt: 09172890.7
(22) Date de dépôt: 13.10.2009
(51) Int. Cl.: G06Q 10/00

(54) **Système embarque d'identification et de controle du contenu d'un aeronef**

(30) Priorité: 24.10.2008 FR 0805919
(71) Demandeur: Thales, 92200 Neuilly Sur Seine (FR)
(72) Inventeur: Guichard, Philippe, 26120 CHABEUIL (FR)
(74) Mandataire: Esselin, Sophie

(57) **Abrégé**

L'objet de l'invention est de permettre la connaissance exhaustive des contenus préalablement marqués d'un moyen de transport aérien. L'invention consiste ainsi en un système d'identification et de contrôle de l'ensemble des éléments appartenant au contenu d'un aéronef (V) de transport permettant à l'utilisateur de connaître en temps réel le contenu dudit aéronef (V) de transport.

Elle repose notamment sur l'utilisation de moyens de lecture à distance (R1,R2,R3), tels que des lecteurs RFID, positionnés de manière à former un portail au niveau d'au moins une des portes d'accès (A1,A2,A3) de l'aéronef (V) de transport, capables d'acquérir l'identité de l'ensemble des éléments entrant ou sortant dudit aéronef (V) de transport, et elle se caractérise par le fait que les moyens d'alimentation et les moyens de communication utilisés par le système selon l'invention peuvent exploiter les réseaux d'alimentation et de communication de l'aéronef (V) conçus pour fonctionner uniquement lorsque ledit aéronef (V) est au sol.

## Description

La présente invention concerne le domaine des moyens de transport aériens. Plus précisément, le dispositif selon l'invention est un système embarqué d'identification du contenu d'un aéronef.

L'objet de l'invention est de permettre la connaissance exhaustive des contenus préalablement marqués d'un moyen de transport aérien. L'invention consiste en un système d'identification et de contrôle de l'ensemble des éléments préalablement marqués appartenant au contenu dudit moyen de transport aérien, en garantissant l'absence totale de toute perturbation des systèmes de vol.

Dans le présent document, le terme « marqué » signifie « porteur d'une marque » (ou « tag » en anglais) de type AID (pour Automated Identification selon l'acronyme anglais) ou RFID (pour Radio-Frequency Identification selon l'acronyme anglais).

Il est important pour un exploitant d'aéronefs de connaître avec précision le contenu de celui-ci. On entend par contenu, de manière non exhaustive : les passagers, les membres d'équipage, le personnel de maintenance, les bagages, la charge marchande cargo, les contenus de type ressources de restauration ou de vente au passager en vol, ainsi que les matériels composant l'aéronef. Cette connaissance permet de satisfaire à plusieurs fonctions :
- la sécurité et gestion du vol pour le contenu humain,
- la garantie du bon transit des bagages,
- la garantie du bon transit de la charge cargo,
- la garantie de l'adéquation des ressources de restauration et de vente,
- la garantie de la configuration des composants de l'avion.

Par exemple, pour les bagages, la mauvaise orientation d'un bagage peut causer un retard pour le passager ou une perte complète du bagage, induisant un coût élevé pour la majorité des exploitants ou compagnies aériennes.

De nombreux projets connus permettant d'assurer ladite connaissance de contenu se concentrent sur l'élaboration de systèmes d'identification « sol », c'est-à-dire non embarqués, d'une part, ou embarqués d'autre part.

Il existe des systèmes connus, tel que celui décrit dans le brevet US2002089434 pour permettre l'identification du contenu en marchandises et en personnes d'un véhicule ; ces systèmes sont décrits comme applicables aux véhicules aériens. Ils présentent cependant une difficulté majeure, dont la résolution est l'objet de la présente invention, ladite difficulté empêchant jusqu'à présent une utilisation en exploitation des systèmes décrits dans ledit brevet : cette difficulté réside dans la complexité de la démonstration de non-perturbation des systèmes critiques pour le vol. Cet inconvénient entraîne à ce jour la non-certification pour vol de tels systèmes.

D'autres systèmes connus permettent l'identification des composants d'un aéronef, tel que celui décrit dans le brevet PCT/US2006/036873. Les systèmes de ce type sont dédiés aux composants de l'aéronef, et n'incluent pas de système embarqué de lecture et de transmission des informations embarquées : ils ne sont destinés qu'aux opérations de maintenance.

Il existe par ailleurs d'autres systèmes connus dans la catégorie « systèmes sol », c'est-à-dire dont tous les composants du dispositif sont au sol, et non embarqués dans l'aéronef.

Il faut noter que le terme « certification », utilisé dans la présente description et dans les revendications, se rapporte à la certification pour autorisation de vol commercial délivrée par les autorités publiques en charge desdites autorisations pour des aéronefs, telles la « Federal Aviation Administration » - FAA - aux Etats-Unis, ou « l'European Aviation Safety Agency » - EASA - en Europe.

Les systèmes « sol » présentent plusieurs inconvénients majeurs, liés notamment à des difficultés de mise en oeuvre. Par exemple, leur installation peut s'avérer complexe et coûteuse, notamment dans le cadre d'utilisations dans des contextes indépendants de l'aéronef : on peut citer le cas des passerelles d'accès aux aéronefs dans les aéroports, qui appartiennent à l'aéroport et sont utilisés par plusieurs compagnies aériennes. Par ailleurs, ces systèmes présentent le défaut de nécessiter que chacun des lieux de destination de l'aéronef soit équipé desdits systèmes « sol ». Enfin, des systèmes « sol » ne peuvent pas garantir avec certitude le contenu de l'aéronef car des éléments peuvent passer par le système « sol » et ne pas atteindre la porte d'accès de l'aéronef, ou ressortir par une autre porte de l'aéronef qui ne correspond pas à un détecteur du système « sol ».

Les systèmes embarqués connus présentent l'inconvénient important d'induire un surcoût de certification des aéronefs équipés, notamment pour des aéronefs de transport civils, en particulier dans le cas où il leur est nécessaire d'utiliser des ressources dudit aéronef utiles au vol, ces ressources étant de fait critiques pour la sécurité de l'avion et de ses occupants.

Dans la suite de la description et dans les revendications, on entend par « alimentation » un dispositif de conversion ou de distribution d'énergie électrique.

Par exemple, si un tel système d'identification de type connu utilise comme source d'énergie une alimentation commune avec l'un quelconque des systèmes de vol, alors toutes les précautions et toutes les contraintes dudit système de vol sur ladite alimentation sont applicables au système d'identification, rendant le processus de certification très long et très coûteux, du fait notamment de la démonstration de non-perturbation qui doit être apportée pendant le processus de certification.

Cette démonstration de non-perturbation est d'autant plus indispensable dans le cas où les moyens d'identification qui font partie du dispositif d'identification font appel aux radio-fréquences, susceptibles d'interférer avec les systèmes de vol.

L'invention a par conséquent pour objet un système permettant l'identification des éléments entrant et sortant d'un aéronef de transport, qu'il s'agisse de personnes ou d'objets, tel qu'il rende possible la connaissance en temps réel, par le système informatique de l'utilisateur dudit système, du contenu de l'aéronef de transport, et tel que son installation sur ledit aéronef de transport ne nécessite qu'un complément de certification mineur, n'impliquant pas de démonstration de non-perturbation de systèmes critiques pour la sécurité de l'aéronef, ce dernier point permettant de pallier à l'inconvénient majeur de la technique de l'état antérieur précité. Résoudre ce problème est l'objectif principal du dispositif selon l'invention. Les caractéristiques du dispositif selon l'invention les rendent possibles et certifiables sur un aéronef existant.

De façon à décrire la manière dont le dispositif selon l'invention garantit l'absence de toute perturbation redoutée au sens de la certification, on décrit maintenant une caractéristique particulière et connue des aéronefs.

Les aéronefs connus comportent des systèmes dits « non-critiques », au sens qu'ils ne sont pas critiques pour la sûreté du vol.

Parmi ces systèmes, certains sont conçus et certifiés pour n'être activables que lorsque l'aéronef est au sol. Un moyen connu pour parvenir à l'activation / désactivation de ces systèmes est de conditionner leur alimentation en énergie électrique à un signal appelé « weight-on-wheels » - pour « poids sur les roues » selon l'expression anglo-saxonne consacrée - qui provient généralement d'un contacteur sur le train d'atterrissage.

On se reportera aux normes référencées par la FAA ou de l'EASA pour les critères qui définissent un tel système comme étant non-critique, activable uniquement au sol, et non source de perturbation des systèmes critiques. Le seul élément technique auquel on se réfère dans la présente description est que l'activation d'un tel système est certifiée comme étant impossible en vol. Dans la description qui suit, on cite comme exemple un dispositif de convoyage des containers cargo dans la soute de l'aéronef : les moteurs qui servent à déplacer les chargements sont certifiés non alimentés en vol. Il existe d'autres systèmes dans ce cas, comme ceux utilisés pour le fonctionnement des portes d'accès, ou les systèmes de transfert d'informations par radio-fréquence entre l'avion et un transmetteur au sol au niveau d'une porte d'embarquement au sol. Ces derniers servent notamment aux données de maintenance et aux contenus vidéo de divertissement en vol ; on peut citer par exemple le GateSync™ de Thales™.

L'invention consiste en un système d'identification et de contrôle du contenu de moyens de transport aérien comprenant des portails au niveau des accès desdits moyens de transport, qui permettent la lecture à distance de marqueurs de types AID (pour Automated Identification selon l'acronyme anglais) ou RFID (pour Radio-Frequency Identification selon l'acronyme anglais).

A cet effet, l'invention a pour objet un système embarqué d'identification et de contrôle du contenu d'un aéronef présentant au moins un accès, ledit aéronef comprenant au moins un dispositif électrique préexistant pour une fonction autre que celle du système selon l'invention, faisant usage, pour son activation, d'un réseau d'alimentation conçu et certifié pour ne pouvoir être sous tension que lorsque l'aéronef est au sol, ledit contenu étant constitué d'un ensemble d'éléments pouvant comprendre des objets et / ou des personnes, chacun desdits éléments possédant une identité, ledit ensemble d'éléments présentant un ensemble d'éléments sortant, c'est-à-dire quittant le contenu de l'aéronef, et un ensemble d'éléments entrant, c'est-à-dire rejoignant le contenu de l'aéronef, chacun desdits éléments comportant des moyens d'identification individuels à distance permettant de connaître l'identité desdits éléments, ledit système comprenant par ailleurs :
- un système informatique,
- des moyens de lecture à distance desdits moyens d'identification individuels à distance,
- des moyens d'alimentation desdits moyens de lecture à distance,
- des moyens de communication entre lesdits moyens de lecture à distance et ledit système informatique,
les moyens de lecture à distance desdits moyens d'identification individuels assurant l'acquisition de l'identité des éléments entrant et l'identité des éléments sortant, et communiquant avec le système informatique, de manière à permettre la connaissance en temps réel de l'identité de l'ensemble des éléments constituant le contenu de l'aéronef, **caractérisé en ce que** lesdits moyens d'alimentation tirent leur énergie dudit réseau d'alimentation, conçu et certifié pour ne pouvoir être sous tension que lorsque l'aéronef est au sol.

Avantageusement, lesdits moyens de communication sont conçus pour fonctionner uniquement lorsque l'aéronef est au sol.

Avantageusement, lesdits moyens de communication sont de type CPL (pour Communication on Power Lines selon l'acronyme anglais). Dans ce cas, le ou les canaux physiques de communication sont confondus avec le ou les canaux physiques d'alimentation en énergie.

Dans un mode de réalisation préférentiel, l'aéronef comprenant un ensemble de canaux physiques de communications préexistant pour d'autres fonctions que celle du système selon l'invention, et conçus pour n'être activables que lorsque l'aéronef est au sol, **caractérisé en ce que** les moyens de communication du système selon l'invention utilisent des canaux physiques de communication appartenant audit ensemble de canaux physiques de communication préexistant, à l'exclusion de tout canal physique de communication.

Avantageusement, le système selon l'invention comporte en outre des moyens de connexion entre eux desdits moyens de lecture à distance.

Avantageusement, lesdits moyens d'identification individuels à distance comprennent des informations relatives auxdits éléments.

Avantageusement, le système selon l'invention comporte des moyens spécifiques pour informer en temps réel un utilisateur dudit système de l'identité et des informations relatives aux éléments entrant ou aux éléments sortant.

Avantageusement, au moins une partie des moyens de communication peut être non filaires.

Avantageusement, lesdits moyens d'identification individuels à distance sont des marqueurs de type AID (pour Automated Identification selon l'acronyme anglais), soit des « tags AID » selon l'expression anglo-saxonne consacrée.

Avantageusement, lesdits moyens d'identification individuels à distance sont des marqueurs RFID (pour Radio-Frequency Identification selon l'acronyme anglais), soit des « tags RFID » selon l'expression anglo-saxonne consacrée.

Avantageusement, lesdits moyens de lecture à distance sont adaptés à la lecture de l'un au moins des types de marqueurs AID suivant : alphanumérique, code-barres, marqueur sans contact - tel que RFID -, marqueur par contact - tel que carte mémoire ou bouton mémoire.

Avantageusement, lesdits moyens de lecture à distance sont des lecteurs RFID (pour Radio-Frequency Identification selon l'acronyme anglais).

Dans un mode de mise en oeuvre envisagée, lesdits lecteurs RFID possèdent au moins une antenne émettrice et réceptrice pouvant utiliser l'une au moins des bandes de fréquences suivantes : basse fréquence LF, haute fréquence HF et très haute fréquence UHF.

Avantageusement, le système selon l'invention peut posséder une liste théorique des éléments entrant comprenant les identités d'un ensemble d'éléments supposés devoir rejoindre le contenu de l'aéronef, et des moyens de comparaison entre ladite liste théorique des éléments entrant et lesdits éléments entrant rejoignant effectivement le contenu de l'aéronef.

Avantageusement, le système selon l'invention peut posséder une liste théorique des éléments sortant comprenant les identités d'un ensemble d'éléments supposés devoir quitter le contenu de l'aéronef, et des moyens de comparaison entre ladite liste théorique des éléments sortant et lesdits éléments sortant quittant effectivement le contenu de l'aéronef.

Avantageusement, le système selon l'invention comprend des moyens d'alerte d'un utilisateur dudit système en cas de contradiction entre la liste théorique des éléments entrant et les éléments entrant rejoignant effectivement le contenu de l'aéronef.

Avantageusement, le système selon l'invention comprend des moyens d'alerte d'un utilisateur dudit système en cas de contradiction entre la liste théorique des éléments sortant et les éléments sortant quittant effectivement le contenu de l'aéronef.

Avantageusement, le système selon l'invention comprend au moins un boîtier de contrôle comprenant un écran permettant d'afficher des images et des textes.

Avantageusement, le système selon l'invention comporte en outre des moyens de lecture à distance portatifs, pouvant comprendre des supports d'alimentation et de communication.

Avantageusement, les moyens de lecture à distance sont fixes, disposés de manière à former un portail au niveau d'au moins une des portes d'accès de l'aéronef.

Avantageusement, le système selon l'invention comprend des unités de traitement assurant l'une au moins des fonctions suivantes :
- concentrateur de données provenant des moyens de lecture à distance,
- concentrateur de données provenant du système informatique,
- transmetteur de données vers l'environnement du système,
- transmetteur de données vers le système informatique (SI).

Avantageusement, les moyens d'alimentation comprennent des coupleurs d'alimentation.

Avantageusement, les coupleurs d'alimentation sont alimentés par une source d'énergie dédiée au contrôle du ou des accès de l'aéronef.

Avantageusement, les moyens d'alimentation utilisent une ou des bandes de fréquences non utilisées par l'aéronef pour son alimentation propre.

Avantageusement, les moyens de communication utilisent une ou des bandes de fréquences non utilisées par l'aéronef pour ses communications propres.

Avantageusement, les moyens de communications du système selon l'invention sont de nature optique.

Avantageusement, le système selon l'invention comprend par ailleurs des moyens de transmission de l'énergie entre les éléments constitutifs du système selon l'invention, lesdits moyens de transmission de l'énergie étant préférentiellement de nature optique.

Avantageusement, le système selon l'invention comporte un boîtier de contrôle passagers, notamment des passagers entrant correspondant auxdits éléments entrant, et ledit boîtier de contrôle passagers indique auxdits passagers des informations utiles telles qu'une position à rejoindre dans l'aéronef.

Avantageusement, l'aéronef comprenant un système de divertissement en vol et des passagers faisant partie dudit contenu de l'aéronef, le système selon l'invention peut comporter une liaison avec ledit système de divertissement en vol, de manière à ce que ledit système de divertissement en vol puisse accéder à l'identité des passagers, en vue de leur proposer des services personnalisés.

Avantageusement, les moyens d'identification individuels à distance des passagers entrant sont intégrés à une carte d'embarquement.

Avantageusement, les moyens de lecture à distance comportent en outre des moyens d'écriture à distance permettant à un utilisateur dudit système de modifier les moyens d'identification individuels à distance.

Avantageusement, lesdits moyens d'écriture sont adaptés à l'un au moins des marqueurs AID suivant : alphanumérique, code-barres, marqueur sans contact - tel que RFID -, marqueur par contact - tel que carte mémoire, ou bouton mémoire.

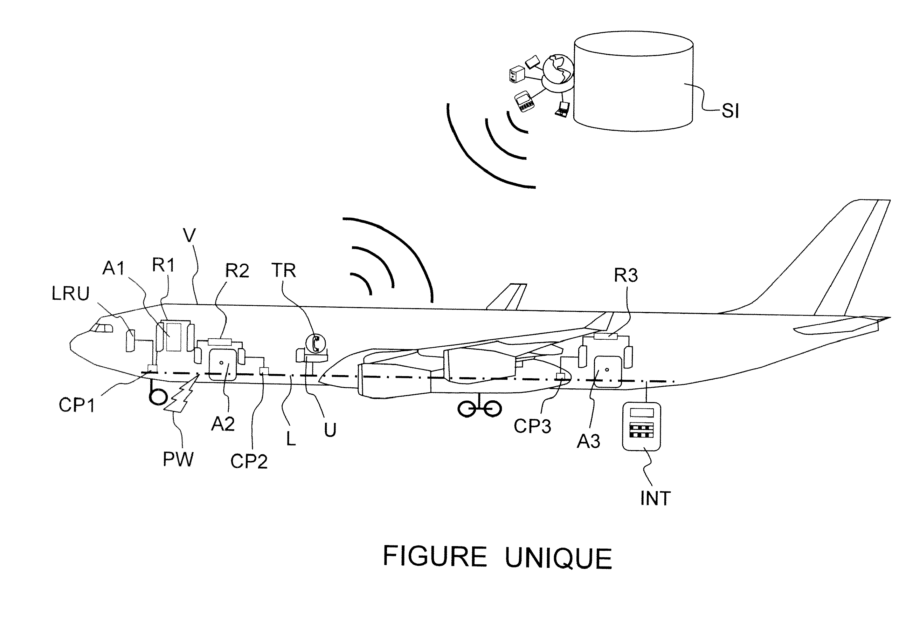

D'autres caractéristiques et avantages de l'invention apparaîtront à l'aide de la description qui suit faite en regard du dessin unique annexé qui représente la vue schématique du système embarqué d'identification et de contrôle du contenu d'un aéronef selon l'invention.

La figure unique présente un schéma du système selon l'invention, représenté, dans un but illustratif, dans le cadre d'une installation sur un aéronef V. Cette figure représente un mode de réalisation préférentiel, dans lequel le réseau d'alimentation préexistant, conçu et certifié pour ne pouvoir être sous tension que lorsque l'aéronef est au sol, et exploité par le dispositif selon l'invention est celui d'un dispositif présent dans la soute de l'avion, tel que le dispositif de convoyage des conteneurs.

Le système embarqué d'identification et de contrôle du contenu d'un aéronef de transport selon l'invention est donc installé sur un aéronef V. Cet aéronef V comprend trois accès A1, A2, A3, dédiés respectivement à l'entrée / sortie des passagers, à l'entrée / sortie des bagages, et à l'entrée /sortie des conteneurs annexes. Chaque accès est équipé de moyens de lecture à distance de type AID (pour Automated Identification selon l'acronyme anglais), soit dans cet exemple des lecteurs RFID (pour Radio-Frequency IDentification selon l'acronyme anglais), respectivement R1, R2, R3. Chaque lecteur RFID est équipé d'antennes, préférentiellement deux pour le lecteur RFID R1 situé à l'entrée passagers et trois antennes pour les autres lecteurs. Ces antennes permettent aux lecteurs RFID R1, R2 et R3 de communiquer entre eux ou avec leur environnement, sur des bandes de fréquences pouvant appartenir aux basses fréquences, aux hautes fréquences ou aux très hautes fréquences.

Des moyens de lecture à distance portatifs, soit par exemple des lecteurs AID portatifs, non représentés sur la figure, peuvent avantageusement compléter le dispositif de lecteurs à distance. Ces lecteurs AID portatifs comportent préférentiellement des supports d'alimentation et de communication. Ils comprennent en outre des modules de communication sans fil, de type WiFi.

La fonction de l'ensemble des moyens de lecture à distance, que ce soit les lecteurs RFID R1, R2, R3, ou les lecteurs AID portatifs, est d'abord de permettre l'identification et le contrôle du contenu de l'aéronef V. A cet effet, chaque élément dudit contenu doit être équipé d'un moyen d'identification individuel à distance, tel qu'un marqueur, ou « tag » selon le terme anglo-saxon consacré, de type AID. Il peut s'agir par exemple d'un tag RFID, comprenant l'identité de l'élément sur lequel il se trouve, ainsi que d'éventuelles informations complémentaires relatives audit élément. Ces informations complémentaires peuvent être de type alphanumérique ou graphique, et comprendre par exemple, outre l'identité de l'élément, son poids, ses dimensions, une photographie numérisée, ou, s'il s'agit d'un passager, la position de sa place dans l'avion. Pour les éléments de type cargo ou les bagages, le tag RFID peut être intégré à une étiquette collée sur l'élément. Pour les passagers, le tag RFID peut être compris dans leur carte d'embarquement.

Lesdits moyens d'identification individuels à distance doivent préférentiellement disposer d'une mémoire suffisante pour accueillir ces diverses informations complémentaires, que le dispositif selon l'invention traite et échange avec des utilisateurs locaux, c'est-à-dire situés dans l'avion ou à proximité immédiate, par voie d'affichage, et / ou avec le système informatique SI au sol de l'exploitant de l'aéronef V. En outre, on peut citer l'exemple des passeports connus équipés d'un marqueur RFID qui contient une photographie numérisée du porteur. Le dispositif selon l'invention peut procéder à la lecture des données correspondantes en même temps que de l'identifiant du passager, et afficher la photographie correspondante sur un écran de contrôle pour vérification par l'équipage. On remarque que la lecture du passeport est dans ce cas une alternative à la lecture d'une carte d'embarquement équipée d'un marqueur RFID. De la même façon, on peut citer l'exemple de l'utilisation de la mémoire des marqueurs existant des conteneurs de restauration - « trolleys » ou « galleys » selon les termes anglais consacrés - pour transmettre à l'équipage des informations sur leur contenu.

On peut par ailleurs noter ici que, de préférence, les moyens de lecture à distance doivent être polyvalents, c'est-à-dire capables de lire différents types de marqueurs AID : alphanumérique, code-barres, marqueur sans contact - tel que RFID -, marqueur par contact - tel que carte mémoire ou bouton mémoire. De plus, afin de permettre des modifications des informations relatives aux éléments, le système selon l'invention peut comprendre des moyens d'écriture compatibles des mêmes types de marqueurs AID.

Ainsi, tout élément entrant ou sortant de l'aéronef V par l'un des accès A1, A2, A3 est détecté et identifié au moyen des lecteurs RFID R1, R2, R3. Il est de ce fait possible de connaître en temps réel l'identité de chacun des éléments appartenant au contenu de l'aéronef V. Toutes les informations lues grâce aux moyens de lecture à distance, dont R1, R2, R3, peuvent être communiquées au système informatique SI de l'exploitant au moyen, par exemple, d'un transmetteur téléphonique TR, ou une boucle radio locale tels que cela est décrit dans le brevet US2008070517 relatif au transfert de contenu d'informations entre un aéronef et des systèmes informatiques au sol. Un utilisateur local du système peut également accéder aux informations relatives au contenu de l'aéronef V, ou aux éléments entrant ou sortant, par l'intermédiaire d'une interface utilisateur pouvant se situer au niveau d'un boîtier de commande INT ou au niveau d'un lecteur AID portatif. Le boîtier de commande INT est équipé d'un écran lui permettant d'afficher du texte et / ou des images à destination de l'utilisateur. De plus, le boîtier de commande INT ou le lecteur portatif AID peut être équipé de moyens d'écriture à distance permettant à l'utilisateur de modifier le tag AID ou RFID des éléments entrant ou sortant de l'aéronef V.

Le système selon l'invention comporte en outre des unités de traitement U dont la fonction est notamment de traiter les données recueillies par les lecteurs RFID R1, R2, R3. Ces unités de traitement U peuvent par exemple assurer l'une des fonctions suivantes :
- concentrateur de données provenant des lecteurs RFID R1, R2, R3,
- concentrateur de données provenant du système informatique SI,
- transmetteur d'informations vers les boîtiers de commande INT,
- transmetteur, de type téléphonie sans fil, permettant la communication avec le système informatique SI.

D'autre part, le système selon l'invention peut disposer de listes comportant l'identité de l'ensemble des éléments sensés rejoindre ou quitter le contenu de l'aéronef V. Le système peut dans ce cas comparer la liste des éléments sensés rejoindre le contenu de l'aéronef V à la liste des éléments entrant effectivement dans l'aéronef V. Le système peut de même comparer la liste des éléments sensés quitter le contenu de l'aéronef V à la liste des éléments sortant effectivement de l'aéronef V. En cas d'anomalie, le système avertit l'utilisateur, par l'intermédiaire par exemple d'une interface utilisateur située au niveau du boîtier de commande INT.

Le système selon l'invention comprend en outre des ensembles de coupleurs CP1, CP2 et CP3, associés respectivement aux lecteurs RFID R1, R2 et R3. Chaque ensemble de coupleurs comprend un coupleur de communication permettant d'assurer les communications entre les différents équipements du système. Ces coupleurs de communication peuvent être filaires, et dans ce cas préférentiellement de type CPL (pour Communication on Power Lines selon l'acronyme anglais). Ce type de coupleurs de communication est bien connu.

Les ensembles de coupleurs CP1, CP2, CP3 comprennent également des coupleurs d'alimentation. Ces derniers tirent leur énergie d'un réseau d'alimentation ou de communication existant dans l'aéronef V, ce réseau embarqué hôte préexistant pour une autre fonction qui est elle-même certifiée pour fonctionner au sol exclusivement

De cette façon, le système selon l'invention n'induit pas de nouvelle démarche de certification complexe de l'aéronef V, ledit système selon l'invention étant alimenté exclusivement au sol de manière certifiée à travers le réseau hôte préexistant.

Par ailleurs, les ensembles de coupleurs CP1, CP2, CP3 peuvent exploiter les supports physiques du réseau de l'aéronef V, que ce soit pour leur alimentation ou leurs communications. En revanche, le système selon l'invention utilise de préférence des bandes de fréquence différentes de celles utilisées par le système hôte, à savoir l'aéronef V, aussi bien pour son alimentation que pour ses communications.

Enfin, selon le mode de mise en oeuvre de l'invention choisi, les coupleurs d'alimentation appartenant aux ensembles de coupleurs CP1, CP2, CP3 du système selon l'invention peuvent tirer leur énergie PW des dispositifs de contrôle des accès A1, A2, A3 ou de dispositifs d'alimentation appartenant par exemple à des convoyeurs de conteneurs, ou de tout autre système embarqué préexistant certifié pour fonctionner au sol exclusivement.

En résumé, l'invention a pour principal avantage de proposer une solution permettant la connaissance précise, en temps réel, du contenu d'un aéronef de transport, au moyen d'une combinaison de technologies courantes et peu coûteuses.

L'invention présente en outre l'avantage de consommer peu d'énergie.

## Revendications

1. Système embarqué d'identification et de contrôle du contenu d'un aéronef (V) présentant au moins un accès (A1,A2,A3), ledit aéronef comprenant au moins un dispositif électrique préexistant pour une fonction autre que celle du système selon l'invention, faisant usage, pour son activation, d'un réseau d'alimentation conçu et certifié pour pouvoir être sous tension uniquement lorsque l'aéronef est au sol, ledit contenu étant constitué d'un ensemble d'éléments pouvant comprendre des objets et / ou des personnes, chacun desdits éléments possédant une identité, ledit ensemble d'éléments présentant un ensemble d'éléments sortant, c'est-à-dire quittant le contenu de l'aéronef (V), et un ensemble d'éléments entrant, c'est-à-dire rejoignant le contenu de l'aéronef (V), chacun desdits éléments comportant des moyens d'identification individuels à distance permettant de connaître l'identité desdits éléments, ledit système comprenant par ailleurs :
• un système informatique (SI),
• des moyens de lecture à distance (R1,R2,R3) desdits moyens d'identification individuels à distance,
• des moyens d'alimentation desdits moyens de lecture à distance (R1,R2,R3),
• des moyens de communication,
les moyens de lecture à distance (R1,R2,R3) desdits moyens d'identification individuels à distance assurant l'acquisition de l'identité des éléments entrant et de l'identité des éléments sortant, et communiquant avec le système informatique (SI), de manière à permettre la connaissance en temps réel de l'identité de l'ensemble • des éléments constituant le contenu de l'aéronef (V), **caractérisé en ce que** lesdits moyens d'alimentation tirent leur énergie dudit réseau d'alimentation préexistant, conçu et certifié pour ne pouvoir être sous tension que lorsque l'aéronef (V) est au sol.

2. Système selon la revendication 1, **caractérisé en ce que** lesdits moyens de communication sont conçus pour fonctionner uniquement lorsque l'aéronef est au sol.

3. Système selon l'une quelconque des revendications précédentes, **caractérisé en ce que** lesdits moyens de communication sont de type CPL (pour Communication on Power Lines selon l'acronyme anglais), le ou les canaux physiques de communication étant dans ce cas confondus avec le ou les canaux physiques d'alimentation en énergie.

4. Système selon l'une quelconque des revendications précédentes, l'aéronef comprenant un ensemble de canaux physiques de communications préexistant pour d'autres fonctions que celle du système selon l'invention, et conçus pour n'être activables que lorsque l'aéronef est au sol, **caractérisé en ce que** les moyens de communication du système selon l'invention utilisent des canaux physiques de communication appartenant audit ensemble de canaux physiques de communication préexistant, à l'exclusion de tout canal physique de communication.

5. Système selon l'une quelconque des revendications précédentes, **caractérisé en ce qu'**il comporte en outre des moyens de connexion entre eux desdits moyens de lecture à distance.

6. Système selon l'une quelconque des revendications précédentes, **caractérisé en ce que** lesdits moyens d'identification individuels à distance comprennent des informations relatives auxdits éléments.

7. Système selon la revendication 6, **caractérisé en ce qu'**il comporte des moyens spécifiques pour informer en temps réel un utilisateur dudit système de l'identité et des informations relatives aux éléments entrant ou aux éléments sortant.

8. Système selon l'une quelconque des revendications précédentes, **caractérisé en ce qu'**au moins une partie des moyens de communication sont non filaires.

9. Système selon l'une quelconque des revendications précédentes, **caractérisé en ce que** lesdits moyens d'identification individuels à distance sont des marqueurs de type AID (pour Automated Identification selon l'acronyme anglais), soit des « tags AID » selon l'expression anglo-saxonne consacrée.

10. Système selon l'une quelconque des revendications précédentes, **caractérisé en ce que** lesdits moyens d'identification individuels à distance sont des marqueurs RFID (pour Radio-Frequency Identification selon l'acronyme anglais), soit des « tags RFID » selon l'expression anglo-saxonne consacrée.

11. Système selon l'une quelconque des revendications précédentes, **caractérisé en ce que** lesdits moyens de lecture à distance (R1,R2,R3) sont adaptés à la lecture de l'un au moins des types de marqueurs AID suivant: alphanumérique, code-barres, marqueur sans contact - tel que RFID -, marqueur par contact - tel que carte mémoire ou bouton mémoire.

12. Système selon l'une quelconque des revendications précédentes, **caractérisé en ce que** lesdits moyens de lecture à distance (R1,R2,R3) sont des lecteurs RFID (pour Radio-Frequency Identification selon l'acronyme anglais).

13. Système selon la revendication 12, **caractérisé en ce que** lesdits lecteurs RFID (R1,R2,R3) possèdent au moins une antenne émettrice et réceptrice pouvant utiliser l'une au moins des bandes de fréquences suivantes : basse fréquence LF, haute fréquence HF et très haute fréquence UHF.

14. Système selon l'une quelconque des revendications précédentes, **caractérisé en ce qu'**il possède une liste théorique des éléments entrant comprenant les identités d'un ensemble d'éléments supposés devoir rejoindre le contenu de l'aéronef (V), et des moyens de comparaison entre ladite liste théorique des éléments entrant et lesdits éléments entrant rejoignant effectivement le contenu de l'aéronef (V).

15. Système selon l'une quelconque des revendications précédentes, **caractérisé en ce qu'**il possède une liste théorique des éléments sortant comprenant les identités d'un ensemble d'éléments supposés devoir quitter le contenu de l'aéronef (V), et des moyens de comparaison entre ladite liste théorique des éléments sortant et lesdits éléments sortant quittant effectivement le contenu de l'aéronef (V).

16. Système selon la revendication 14, **caractérisé en ce qu'**il comprend des moyens d'alerte d'un utilisateur dudit système en cas de contradiction entre la liste théorique des éléments entrant et les éléments entrant rejoignant effectivement le contenu de l'aéronef (V).

17. Système selon la revendication 15, **caractérisé en ce qu'**il comprend des moyens d'alerte d'un utilisateur dudit système en cas de contradiction entre la liste théorique des éléments sortant et les éléments sortant quittant effectivement le contenu de l'aéronef (V).

18. Système selon l'une quelconque des revendications précédentes, **caractérisé en ce qu'**il comprend au moins un boîtier de contrôle (INT) comprenant un écran permettant d'afficher des images et des textes.

19. Système selon l'une quelconque des revendications précédentes, **caractérisé en ce qu'**il comporte en outre des moyens de lecture à distance portatifs, pouvant comprendre des supports d'alimentation et de communication.

20. Système selon l'une quelconque des revendications précédentes, **caractérisé en ce que** les moyens de lecture à distance (Rl,R2,R3) sont fixes, disposés de manière à former un portail au niveau d'au moins une des portes d'accès (A1,A2,A3) de l'aéronef (V).

21. Système selon l'une quelconque des revendications précédentes, **caractérisé en ce qu'**il comprend des unités de traitement (U) assurant l'une au moins des fonctions suivantes :
• concentrateur de données provenant des moyens de lecture à distance (R1,R2,R3),
• concentrateur de données provenant du système informatique (SI),
• transmetteur de données vers l'environnement du système,
• transmetteur de données vers le système informatique (SI).

22. Système selon l'une quelconque des revendications précédentes, **caractérisé en ce que** les moyens d'alimentation comprennent des coupleurs d'alimentation (CP1,CP2,CP3).

23. Système selon la revendication 22, **caractérisé en ce que** les coupleurs d'alimentation (CP1,CP2,CP3) sont alimentés par une source d'énergie dédiée au contrôle du ou des accès (A1,A2,A3) de l'aéronef (V).

24. Système selon l'une quelconque des revendications précédentes, **caractérisé en ce que** les moyens d'alimentation utilisent une ou des bandes de fréquences non utilisées par l'aéronef (V) pour son alimentation propre.

25. Système selon l'une quelconque des revendications précédentes, **caractérisé en ce que** les moyens de communication utilisent une ou des bandes de fréquences non utilisées par l'aéronef (V) pour ses communications propres.

26. Système selon l'une quelconque des revendications précédentes, **caractérisé en ce que** les moyens de communications du système selon l'invention sont de nature optique.

27. Système selon l'une quelconque des revendications précédentes, **caractérisé en ce qu'**il comprend par ailleurs des moyens de transmission de l'énergie entre les éléments constitutifs du système selon l'invention, lesdits moyens de transmission de l'énergie étant préférentiellement de nature optique.

28. Système selon l'une quelconque des revendications précédentes, **caractérisé en ce qu'**il comporte un boîtier de contrôle passagers, notamment des passagers entrant correspondant auxdits éléments entrant, et **en ce que** ledit boîtier de contrôle passagers indique auxdits passagers des informations utiles telles qu'une position à rejoindre dans l'aéronef (V).

29. Système selon l'une quelconque des revendications précédentes, l'aéronef (V) comprenant un système de divertissement en vol et des passagers faisant partie dudit contenu de l'aéronef (V), **caractérisé en ce qu'**il comporte une liaison avec ledit système de divertissement en vol, de manière à ce que ledit système de divertissement en vol puisse accéder à l'identité des passagers, en vue de leur proposer des services personnalisés.

30. Système selon la revendication 29, **caractérisé en ce que** les moyens d'identification individuels à distance des passagers entrant sont intégrés à une carte d'embarquement.

31. Système selon l'une quelconque des revendications précédentes, **caractérisé en ce que** les moyens de lecture à distance (R1,R2,R3) comportent en outre des moyens d'écriture à distance permettant à un utilisateur dudit système de modifier les moyens d'identification individuels à distance.

32. Système selon la revendication 31, **caractérisé en ce que** lesdits moyens d'écriture sont adaptés à l'un au moins des marqueurs AID suivant : alphanumérique, code-barres, marqueur sans contact - tel que RFID -, marqueur par contact - tel que carte mémoire ou bouton mémoire.
